# EUROPÄISCHE PATENTSCHRIFT

(11) **EP 2 159 047 B1**
(45) Veröffentlichungstag und Bekanntmachung des Hinweises auf die Patenterteilung: **06.06.2012**
(21) Anmeldenummer: 09010363.1
(22) Anmeldetag: 12.08.2009
(51) Int. Cl.: B32B 37/10, B32B 37/26, B30B 5/02

(54) **Verfahren und Laminierpresse zum Laminieren von Werkstücken**
Method and laminating press for laminating workpieces
Procédé et presse de laminage destinés à laminer des pièces à usiner

(30) Priorität: 28.08.2008 DE 102008044862
(43) Veröffentlichungstag der Anmeldung: 03.03.2010
(73) Patentinhaber: Robert Bürkle GmbH, 72250 Freudenstadt (DE)
(72) Erfinder: Damm, Norbert, 76689 Karlsdorf-Neuthard (DE)
(74) Vertreter: Lemcke, Brommer & Partner

(56) Entgegenhaltungen:
- WO-A-2006/128699
- DE-A1- 3 017 273
- DE-A1- 3 710 949
- US-A- 4 127 436

## Beschreibung

Die Erfindung betrifft ein Verfahren zum Laminieren von Werkstücken, die mindestens eine durch Wärme aktivierbare Kleberschicht enthalten, unter Druck- und Wärmeeinwirkung nach dem Oberbegriff des Anspruchs 1, sowie eine Laminierpresse zur Durchführung des Verfahrens nach dem Oberbegriff des Anspruchs 8.

Eine Laminierpresse der vorliegenden Art, die bei einem Verfahren der vorliegenden Art verwendet wird, umfasst demnach mindestens eine luftdicht schließbare Pressenkammer mit einer oberen Kammerhälfte und einer unteren Kammerhälfte, die relativ zueinander bewegbar sind, um die Pressenkammer öffnen und schließen zu können. Zwischen der oberen und der unteren Kammerhälfte ist eine umlaufende, ein- oder mehrteilige Dichtung angeordnet, um ein luftdichtes Schließen der Pressenkammer zu ermöglichen. An der oberen Kammerhälfte ist direkt oder indirekt eine Membran angeordnet, welche die Pressenkammer luftdicht teilt, so dass die Pressenkammer in einen zwischen der unteren Kammerhälfte und der Membran befindlichen Produktraum sowie einen zwischen der Membran und der oberen Kammerhälfte befindlichen Druckraum geteilt ist, sobald die Pressenkammer geschlossen wird. Zumindest die untere Kammerhälfte ist mit Mitteln zum Evakuieren der geschlossenen Pressenkammer versehen, so dass jedenfalls der Produktraum unterhalb der Membran evakuiert werden kann.

An dieser Stelle ist anzumerken, dass im Sinne der vorliegenden Erfindung nicht unbedingt eine elastische Membran verwendet werden muss. Für die Membran kann vielmehr auch ein nicht-elastisches Material verwendet werden, d.h. nicht zugelastische bzw. zugfeste Diaphragma-Materialien. Wichtig ist lediglich, dass die Membran die Pressenkammer luftdicht teilt.

Um die zum Laminieren von Werkstücken notwendige Prozesswärme in das Werkstück einzubringen, umfasst die Laminierpresse Mittel zum Einbringen von Wärme in das Werkstück, wobei diese Mittel in der Regel aus Heizplatten bestehen, die einen Teil der unteren und/oder der oberen Kammerhälfte bilden.

Um ein Werkstück - oder meist mehrere Werkstücke gleichzeitig, der Einfachheit halber wird im Folgenden nur von einem Werkstück gesprochen - zu laminieren, wird dieses in den Produktraum der Pressenkammer verbracht und die Pressenkammer geschlossen. Zu diesem Zeitpunkt.soll das Werkstück möglichst wenig erwärmt werden. Denn das Erwärmen des Werkstücks auf und über die Erweichungstemperatur der darin enthaltenen Kleberschicht - oder Kleberschichten, auch hier wird nur der Klarheit halber von einer Kleberschicht gesprochen - soll unter Vakuum erfolgen, um etwaige Lufteinschlüsse oder etwaige beim Erwärmen gebildete Gase aus dem Werkstück herauszuziehen, bevor ein Härten bzw. Vernetzen des Klebers in der Kleberschicht beginnt. Lufteinschlüsse oder Gasblasen können Undichtigkeiten im fertig laminierten Werkstück hervorrufen und müssen daher verhindert werden.

Um diese Randbedingungen einzuhalten, wird normalerweise zunächst der Druckraum der Pressenkammer evakuiert, um die Membran nach oben zur oberen Kammerhälfte zu ziehen. Sodann, üblicherweise mit einem gewissen Zeitversatz; wird nach dem Schließen der Pressenkammer auch der Produktraum evakuiert, wobei das Evakuieren beider Räume der Pressenkammer so geregelt wird, dass immer ein Differenzdruck zwischen dem Druckraum und dem Produktraum bestehen bleibt, der die Membran an der oberen Kammerhälfte hält und verhindert, dass die Membran vorzeitig in Kontakt mit dem Werkstück gelangt.

Wenn der Produktraum der Pressenkammer bis zu einem Solldruck evakuiert worden ist, der in der Regel unterhalb 1 mbar liegt, wird der Druckraum so weit belüftet, dass sich die Druckdifferenz zwischen dem Druckraum und dem Produktraum umkehrt und die Membran sich auf das Werkstück auflegt. Durch Regeln des Drucks im Druckraum wird der Anpressdruck der Membran eingestellt. Der durch die Membran ausgeübte Druck auf das Werkstück sorgt dann zusammen mit einer Einbringung der Prozesswärme in das Werkstück für das Erweichen bzw. Aktivieren der Kleberschicht und gegebenenfalls für deren Aushärten.

Das bevorzugte Anwendungsgebiet der vorliegenden Erfindung ist das Laminieren von Photovoltaik-Modulen, bei denen eine Solarzellenschicht mitsamt ihren elektrischen Kontaktierungselementen feuchtigkeitsdicht sowie wetterfest und dennoch lichtdurchlässig eingekapselt wird. Hierbei werden oft Laminierpressen eingesetzt, bei denen außerdem eine das Werkstück nach oben gegen die Membran abdeckende Trennfolie verwendet wird, wobei die Trennfolie zusammen mit dem Werkstück in die geöffnete Pressenkammer einbringbar ist. Diese Trennfolie verhindert, dass der in Photovoltaik-Modulen üblicherweise verwendete, sehr stark adhäsive Kleber mit der Membran in Berührung kommt und diese verunreinigt und somit in ihrer Verwendbarkeit für hervorragende. Prozessergebnisse einschränkt oder gar unbrauchbar macht.

Eine solche Trennfolie wird beim Schließen der Pressenkammer zwischen der oberen Kammerhälfte und der unteren Kammerhälfte festgeklemmt. Da die Trennlinie zwischen der oberen Kammerhälfte und der unteren Kammerhälfte in den allermeisten Fällen nicht exakt auf der Höhe der oberen Begrenzungsfläche des Werkstücks liegt, sondern darunter, wird die Trennfolie von ihren festgeklemmten Stellen zwischen der oberen und der unteren Kammerhälfte ausgehend über das Werkstück umgelenkt, was eine Längs-Zugspannung in der Trennfolie zur Folge hat. Dies führt an den Kanten des Werkstücks, über die die Trennfolie umgelenkt wird, zu erhöhten Belastungen.

Dieser Effekt wird noch um ein Vielfaches verstärkt, wenn das Werkstück nach dem Schließen der Pressenkammer angehoben wird. Eine solche Maßnahme ist bei Laminierpressen der vorliegenden Art üblich, denn in aller Regel wird die Prozesswärme durch eine in die untere Kammerhälfte integrierte Heizplatte in die Pressenkammer eingebracht, und das Werkstück soll, wie oben bereits ausgeführt, so lange möglichst wenig erwärmt werden, wie der Produktraum unter der Membran evakuiert wird. Dieses Anheben des Werkstücks bei geschlossener Pressenkammer und demgemäß festgeklemmter Trennfolie erhöht die Belastung der Kanten des Werkstücks stark.

Eine Laminierpresse der eingangs genannten Art mit Trennfolie ist aus der WO-A-2006/128699 bekannt. Nach diesem Stand der Technik wird die Trennfolie in Abschnitte unterteilt, die spannungsfrei und lose auf das Werkstück aufgelegt in die geöffnete Pressenkammer eingebracht werden. Auch beim Ausfahren des frisch laminierten Werkstücks soll die Trennfolie lose auf dem Werkstück liegend mit diesem zusammen ausgefahren werden, so dass die noch nicht gegeneinander fixierten einzelnen Schichten des Werkstücks von jeglicher Trennfolienspannung unbeeinflusst bleiben. Der hierfür vorgesehene spannungslose Transport der Trennfolienabschnitte verursacht jedoch weitere Probleme, wie zum Beispiel Faltenbildung, wobei gleichzeitig trotzdem nicht ausgeschlossen ist, dass die Trennfolie beim Schließen der Pressenkammer festgeklemmt und über die Werkstückkanten umgelenkt wird, was zu den oben beschriebenen Längs-Zugspannungen und nachteiligen Belastungen an den Kanten des Werkstücks führen kann.

Der vorliegenden Erfindung liegt daher die Aufgabe zugrunde, ein Verfahren und eine Laminierpresse zum Laminieren von Werkstücken der eingangs genannten Art hinsichtlich der mechanischen Belastungen der zu laminierenden Werkstücke zu verbessern.

Gelöst ist diese Aufgabe durch ein Verfahren mit den Merkmalen des Anspruchs 1 sowie durch eine Laminierpresse mit den Merkmalen des Anspruchs 8. Bevorzugte Weiterbildungen des erfindungsgemäßen Verfahrens ergeben sich aus den Ansprüchen 2 bis 7; vorteilhafte Ausgestaltungen der erfindungsgemäßen Laminierpresse sind in den Ansprüchen 9 bis 14 niedergelegt.

Erfindungsgemäß ist erkannt worden, dass die mechanische Belastung der Werkstückkanten, jedenfalls der randseitigen Werkstückkanten, soweit mehrere Werkstücke gleichzeitig in der Pressenkammer laminiert werden, für eine Vielzahl von fehlerhaften Laminierergebnissen und Störungen verantwortlich ist:

Beim Betreiben von Laminierpressen nach dem Stand der Technik treten relativ häufig Produktfehler auf, die entweder zur Beeinträchtigung der Qualität des Produkts oder sogar zum Totalausschuss führen. Bei Photovoltaik-Modulen ist dies häufig ein Glasbruch, was nicht nur zum Verlust des entsprechenden Moduls führt, sondern wegen des erforderlichen Reinigungsaufwandes zur Beseitigung von Glasscherben zu zusätzlichem Produktionsausfall. Außerdem birgt Glasbruch das Risiko weiterer Beschädigungen, beispielsweise einer Beschädigung der Membran.

Auch wenn kein Glasbruch entsteht, können Produktfehler auftreten, beispielsweise indem einzelne miteinander zu laminierende Schichten des Werkstücks beim Erweichen der Kleberschicht gegeneinander verrutschen.

Die bereits erwähnte Umlenkung der zwischen den beiden Kammerhälften der Pressenkammer festgeklemmten Trennfolie an den randseitigen Oberkanten des Werkstücks oder der Werkstücke führt nicht nur zu einer Biegebelastung an dieser Stelle, sondern auch zu erheblichen Querkräften. Erfindungsgemäß ist hier erkannt worden, dass diese Biegemomente und Querkräfte für die erwähnten Produktfehler und Glasbrüche ursächlich sind.

Im Rahmen der vorliegenden Erfindung wird daher vorgeschlagen, die Trennfolie vor dem Schließen der Pressenkammer zu entspannen, sowie, soweit ein Anheben des Werkstücks für die Dauer des Evakuierens des Produktraums in der Pressenkammer erfolgen soll, das Werkstück bereits vor dem luftdichten Schließen der Pressenkammer anzuheben, also solange die Trennfolie noch nicht zwischen den beiden Kammerhälften festgeklemmt ist. Durch diese Maßnahmen wird erreicht, dass die zur Vermeidung einer Faltenbildung üblicherweise vorgespannte Trennfolie entspannt und ohne Längungen auf dem Werkstück aufliegt, wenn die Pressenkammer geschlossen wird und die Trennfolie festklemmt.

Soweit das Werkstück in der Pressenkammer angehoben wird, wird die Trennfolie vorzugsweise vor dem oder beim Anheben des Werkstücks entspannt. Damit vermeidet man eine Faltenbildung auf dem Werkstück. In jedem Fall ist es vorteilhaft, wenn die Trennfolie entspannt wird, kurz bevor die Pressenkammer vollständig luftdicht geschlossen wird, d.h. die Pressenkammer wird vorzugsweise zunächst nahezu geschlossen, dann die Trennfolie entspannt, und dann die Pressenkammer vollständig luftdicht geschlossen. Durch diese Maßnahme ist wiederum gewährleistet, dass die Trennfolie faltenfrei auf dem Werkstück aufliegt, wobei jedoch beim Schließen der Pressenkammer danach nur noch ein kleiner Weg zurückgelegt wird und die Längung der Trennfolie dementsprechend ebenso gering ausfällt, um eine Belastung der Werkstückkanten zu vermeiden.

Vorzugsweise wird das Werkstück mittels eines durch die Pressenkammer laufenden, im Wesentlichen synchron mit der Trennfolie bewegten Förderbandes in die Pressenkammer eingebracht und aus dieser wieder herausgefördert.

Das Entspannen der Trennfolie kann durch eine Bewegung von Trennfolien-Führungselementen, insbesondere von Umlenkrollen oder des Trennfolien-Antriebs erfolgen.

Anhand der beigefügten Zeichnungen wird ein Ausführungsbeispiel für eine erfindungsgemäß ausgebildete Laminierpresse beschrieben, sowie der Ablauf eines konventionellen Verfahrens nach dem Stand der Technik mit der entsprechenden, erfindungsgemäß erkannten Problemstellung erläutert. Es zeigen:
- Figur 1: eine schematische seitliche Schnittdarstellung einer erfindungsgemäß ausgestalteten Laminierpresse;
- Figur 2: eine Ansicht wie Figur 1, jedoch einer Laminierpresse nach dem Stand der Technik, in einem ersten Verfahrensstadium;
- Figur 3: die Laminierpresse aus Figur 2 in einem zweiten Verfahrensstadium;
- Figur 4: die Laminierpresse aus Figur 2 in einem dritten Verfahrensstadium.

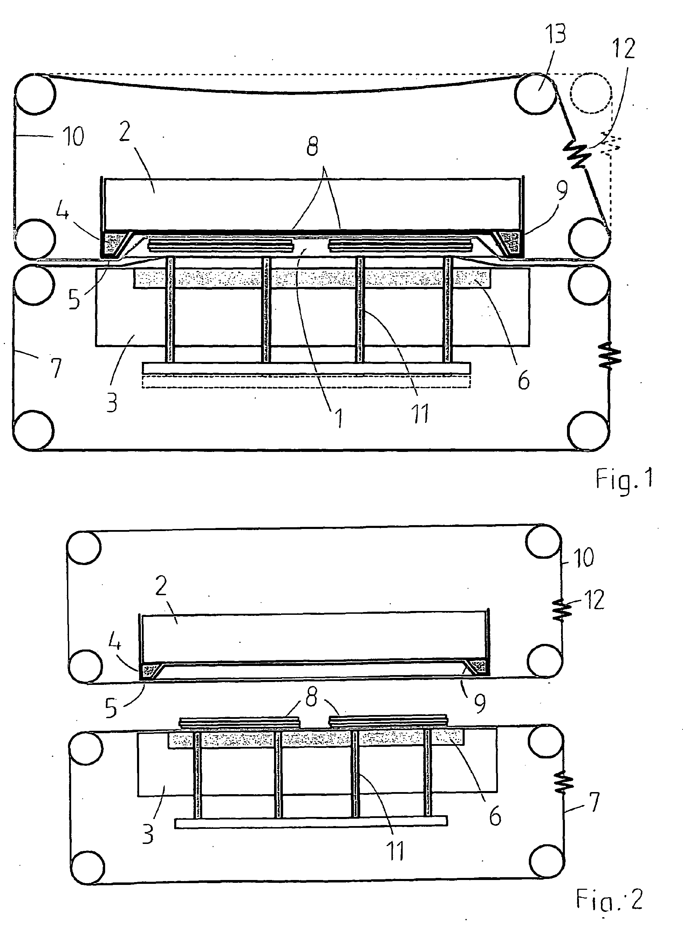

Die in Figur 1 in einer schematischen seitlichen Schnittdarstellung gezeigte Vorrichtung umfasst eine Pressenkammer 1 mit einer oberen Kammerhälfte 2 und einer unteren Kammerhälfte 3 sowie einen an der oberen Kammerhälfte 2 angebrachten Dichtrahmen 4 mit einer umlaufenden Dichtung 5. Die obere Kammerhälfte 2 ist auf- und abbewegbar, um die Pressenkammer öffnen und schließen zu können. Die untere Kammerhälfte 3 ist mit einer Heizplatte 6 versehen, um die benötigte Prozesswärme in die Pressenkammer 1 einbringen zu können. Auf einem umlaufenden Förderband 7 werden Werkstücke 8 in die Pressenkammer 1 eingebracht und aus dieser wieder herausgefördert. Diese Werkstücke 8 sind im vorliegenden Ausführungsbeispiel Photovoltaik-Module, bestehend aus einer Glasplatte, einer Solarzellenschicht, die in eine Kleberschicht eingebettet ist, und einer Rückseitenfolie. Diese Schichten sollen in der vorliegenden Vorrichtung unter Druck- und Wärmeeinwirkung miteinander laminiert werden.

An der oberen Kammerhälfte 2 ist eine flexible Membran 9 angebracht, die im gezeigten Verfahrensstadium durch Evakuieren des oberhalb der Membran 9 befindlichen Raumes an die obere Kammerhälfte 2 herangezogen worden ist. Die Membran 9 teilt die Pressenkammer 1 ganzflächig luftdicht. Zum Schutz dieser Membran 9 wird synchron mit dem Förderband 7 eine Trennfolie 10 mit den Werkstücken 8 in die Pressenkammer 1 eingebracht und aus dieser wieder herausgefördert. Die Trennfolie 10 liegt zwischen den Werkstücken 8 und der Membran 9 und schützt die Membran 9 dementsprechend vor etwa aus den Werkstücken 8 austretendem Kleber. Eine Feder 12 spannt die Trennfolie 10 flächig, um während ihres Transports durch die Pressenkammer 1 eine Faltenbildung zu vermeiden.

In der unteren Kammerhälfte 3 ist eine Anhebevorrichtung 11 gelagert, mit deren Hilfe die Werkstücke 8 von der in der unteren Kammerhälfte 3 eingelassenen Heizplatte 6 weggehoben werden können. Dieses Anheben verhindert, dass die Werkstücke 8 frühzeitig mit Wärme aus der Heizplatte 6 beaufschlagt werden.

In den bislang beschriebenen Teilen entspricht die in Figur 1 dargestellte, erfindungsgemäß ausgestaltete Vorrichtung einer Vorrichtung nach dem Stand der Technik, wie sie in den Figuren 2, 3 und 4 dargestellt ist. Einander entsprechende Bauteile sind daher in allen Figuren mit gleichen Bezugszeichen versehen. Anhand der Figuren 2 bis 4 soll nun der Verfahrensablauf nach dem Stand der Technik beschrieben werden:

Das in Figur 2 dargestellte Beladen der geöffneten Pressenkammer 1 mit Werkstücken 8 erfolgt bei abgesenkter Anhebevorrichtung 11. Dies ist notwendig, da ansonsten das Förderband 7 über die Anhebevorrichtung 11 gezogen werden müsste und die Vorderkanten der Werkstücke 8 durch Anstoßen an die Anhebevorrichtung 11 beschädigt werden könnten.

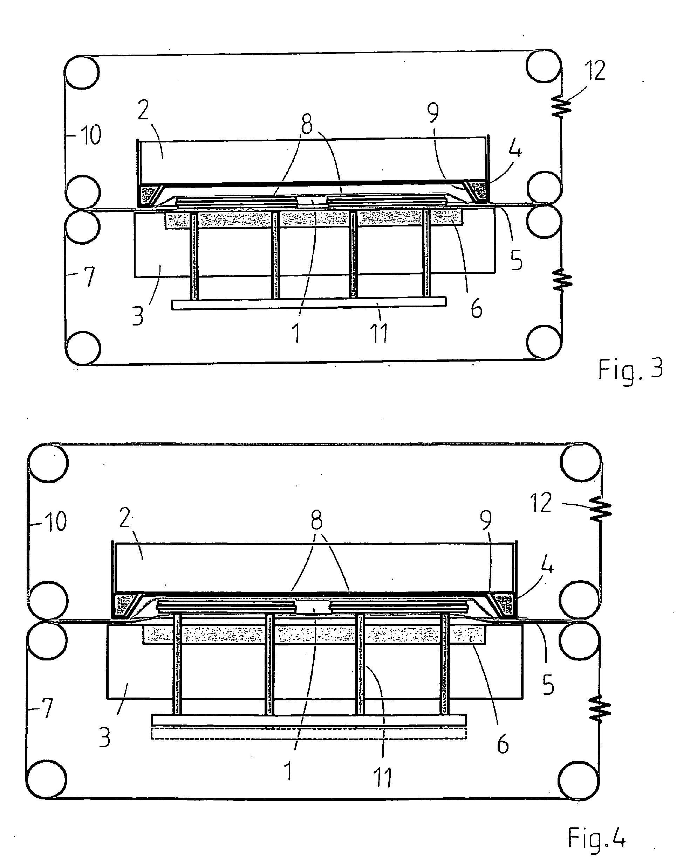

Wie Figur 3 zeigt, wird im Stand der Technik sodann die Pressenkammer 1 durch Absenken der oberen Kammerhälfte 2 auf die untere Kammerhälfte 3 geschlossen. Aufgrund der Notwendigkeit, die Pressenkammer 1 luftdicht zu schließen, werden hierbei sowohl das Förderband 7 als auch die Trennfolie 10 zwischen der oberen Kammerhälfte 2 bzw. dem dort befestigten Dichtrahmen 4 und der unteren Kammerhälfte 3 an der Dichtung 5 unverrückbar fest eingeklemmt. Da die Trennfolie 10 mittels einer Feder 12 gespannt ist, um faltenfrei zu bleiben, wird sie bereits im Augenblick der Klemmung durch die erhaben auf dem Förderband 7 liegenden Werkstücke 8 nach oben gespannt. Die in Förderrichtung außenliegenden Werkstückkanten werden hierdurch mit einer Kraftkomponente aus der Zugspannung der Trennfolie 10 beaufschlagt. Diese Zuglast wirkt längs der Transportrichtung von außen nach innen gerichtet auf die Querkanten der außenliegenden Werkstücke 8. Je näher hierbei die Werkstücke 8 am Dichtrahmen 4 der Pressenkammer 1 liegen, desto stärker und steiler wirkt die resultierende Kraftkomponente.

Wie Figur 4 zeigt, wird im Stand der Technik unmittelbar nach dem Schließen der Pressenkammer 1 die Anhebevorrichtung 11 aktiviert, um die Werkstücke 8 von der Heizplatte 6 weg anzuheben. Ziel dieser Maßnahme ist, eine vorzeitige unerwünscht hohe Erwärmung der Kleberschichten in den Werkstücken 8 zu vermeiden. Üblicherweise wird ein Hub von 12 bis 15 mm durchgeführt.

Beim Anheben der Werkstücke 8 wird die eingespannte Trennfolie 10 weiter belastet. Bei üblichen Randabständen der außenliegenden Werkstücke 8 vom Dichtrahmen 4 von ca. 50 bis 80 mm entsteht ein erhebliches Biegemoment und daraus folgend wirken eine hohe Biegebelastung sowie Querkräfte auf die Werkstücke 8, was durchaus zu Glasbrüchen führen kann. Die Feder 12 kann hierbei keinen Ausgleich schaffen, da die Trennfolie 10 in der luftdicht geschlossenen Pressenkammer randseitig eingespannt ist.

Wieder auf die Figur 1 zurückkommend, können die erfindungsgemäßen Maßnahmen zur Behebung der erfindungsgemäß erkannten Probleme beschrieben werden:

Wie Figur 1 zeigt, wird zunächst die Verfahrensreihenfolge geändert. Das Anheben der Werkstücke 8 von der Heizplatte 6 durch die Anhebevorrichtung 11 erfolgt bereits bei noch nicht ganz geschlossener Pressenkammer 1. Zu diesem Zeitpunkt ist die Trennfolie 10 also noch nicht randseitig geklemmt. Die Aufwärtsbewegung der Werkstücke 8 zieht die nicht geklemmte Trennfolie 10 über die Dichtung 5. Die hierzu erforderliche Zugkraft ist sehr gering, da die Trennfolie 10 wegen ihrer haftungsabweisenden Funktion sehr reibungsarm ist, und zuvor die Spannung der Feder 12 entspannt worden ist. Danach liegt die Trennfolie 10 längsspannungsfrei über den von der Heizplatte 6 abgehobenen Werkstücken 8. Der dann folgende minimale restliche Schließhub der oberen Kammerhälfte 2 kann keine Trennfolien-Längsspannung mehr aufbauen; die Werkstücke 8 liegen stressfrei auf der Anhebevorrichtung 11.

Als zusätzliche erfindungsgemäße Maßnahme ist vorgesehen, und in Figur 1 dargestellt, eine Umlenkstation 13 für die Umlenkung und Führung der umlaufenden Trennfolie 10 senkrecht zur Umlenkachse zu bewegen, um die Trennfolie 10 aktiv entspannen zu können. Hierdurch wird insbesondere die Federkraft 12, die ein faltenloses Aufliegen der Trennfolie 10 während des Einförderns der Werkstücke 8 sicherstellt, kompensiert bzw. überkompensiert, so dass die Trennfolie 10 in jedem Fall entspannt auf den Werkstücken 8 aufliegen kann und die Werkstücke 8 demnach nicht belastet werden.

Bei einer nicht umlaufenden Ausbildung der Trennfolie 10 kann ein aktives Entspannen derselben beispielsweise durch eine leichte Rückbewegung der Zugelemente für die Trennfolienstücke erfolgen.

## Patentansprüche

1. Verfahren zum Laminieren von Werkstücken, die mindestens eine durch Wärme aktivierbare Kleberschicht enthalten, unter Druck- und Wärmeeinwirkung, umfassen die Verfahrensschritte:
- Einbringen mindestens eines Werkstücks (8) in eine geöffnete, luftdicht schließbare Pressenkammer (1) einer Laminierpresse, mit einer oberen Kammerhälfte (2) und einer unteren Kammerhälfte (3) die relativ zueinander bewegbar sind, um die Pressenkammer (1) zu öffnen oder zu schließen, mit einer zwischen der oberen und der unteren Kammerhälfte (2, 3) angeordneten, umlaufenden, ein- oder mehrteiligen Dichtung (5), mit einer direkt oder indirekt an der oberen Kammerhälfte (2) angebrachten, die Pressenkammer (1) luftdicht teilenden Membran (9), sowie mit Mitteln (6) zum Einbringen von Wärme in das Werkstück (8),
- Einbringen einer das Werkstück (8) nach oben gegen die Membran (9) abdeckenden Trennfolie (10) in die Pressenkammer (1) der Laminierpresse,
- Schließen der Pressenkammer (1),
- Evakuieren zumindest des unter der Membran (9) befindlichen, das Werkstück (8) umgebenden Volumens der Pressenkammer (1),
- Beaufschlagen des Werkstücks (8) mit Wärme,
**dadurch gekennzeichnet,**
**dass** die Trennfolie (10) vor dem Schließen der Pressenkammer (1) entspannt wird.

2. Verfahren nach Anspruch 1,
**dadurch gekennzeichnet,**
**dass** das Werkstück (8) vor dem luftdichten Schließen der Pressenkammer (1) angehoben wird.

3. Verfahren nach Anspruch 2,
**dadurch gekennzeichnet,**
**dass** die Trennfolie (10) vor dem oder beim Anheben des Werkstücks (8) entspannt wird.

4. Verfahren nach mindestens einem der Ansprüche 1 bis 3,
**dadurch gekennzeichnet,**
**dass** die Pressenkammer (1) nahezu geschlossen, dann die Tennfolie (10) entspannt, und dann die Pressenkammer (1) vollständig luftdicht geschlossen wird.

5. Verfahren nach mindestens einem der Ansprüche 1 bis 4,
**dadurch gekennzeichnet,**
**dass** das Einbringen des Werkstücks (8) in die Pressenkammer (1) mittels eines durch die Pressenkammer (1) laufenden, im Wesentlichen synchron mit der Trennfolie (10) bewegten Förderbandes (7) erfolgt.

6. Verfahren nach mindestens einem der Ansprüche 1 bis 5,
**dadurch gekennzeichnet,**
**dass** die Trennfolie (10) beim Einbringen in die Pressenkammer (1) zur Vermeidung einer Faltenbildung flächig gespannt gehalten wird.

7. Verfahren nach mindestens einem der Ansprüche 1 bis 6,
**dadurch gekennzeichnet,**
**dass** das Entspannen der Trennfolie (10) mittels einer Bewegung von Trennfolien-Führungselementen (13) erfolgt.

8. Laminierpresse zum Laminieren von Werkstücken, die mindestens eine durch Wärme aktivierbare Kleberschicht enthalten, unter Druck- und Wärmeeinwirkung, umfassend mindestens eine luftdicht schließbare Pressenkammer (1) mit einer oberen Kammerhälfte (2) und einer unteren Kammerhälfte (3), die relativ zueinander bewegbar sind, um die Pressenkammer (1) zu öffnen oder zu schließen, mit einer zwischen der oberen und der unteren Kammerhälfte (2, 3) angeordneten, umlaufenden, ein- oder mehrteiligen Dichtung (5), mit einer direkt oder indirekt an der oberen Kammerhälfte (2) angebrachten, die Pressenkammer (1) luftdicht teilenden Membran (9), sowie mit Mitteln (6) zum Einbringen von Wärme in das Werkstück, wobei zumindest die untere Kammerhälfte (3) mit Mitteln zum Evakuieren der geschlossenen Pressenkammer (1) versehen ist, und wobei eine mit mindestens einem Werkstück (8) in die geöffnete Pressenkammer (1) einbringbare, das Werkstück (8) nach oben gegen die Membran (9) abdeckende Trennfolie (10) vorgesehen ist,
**gekennzeichnet durch**
Mittel (13) zum Entspannen der Trennfolie (10).

9. Laminierpresse nach Anspruch 8,
**dadurch gekennzeichnet,**
**dass** die Mittel zum Entspannen der Trennfolie (10) mit Führungselementen (13) für die Trennfolie (10) gekoppelt sind.

10. Laminierpresse nach Anspruch 9,
**dadurch gekennzeichnet,**
**dass** die Führungselemente als Umlenkstationen (13) oder als Zugmittel für die Trennfolie (10) ausgebildet sind.

11. Laminierpresse nach Anspruch 10,
**dadurch gekennzeichnet,**
**dass** mindestens eine Umlenkstation (13) für die Trennfolie (10) bedarfsweise senkrecht zur Umlenkachse bewegbar ist.

12. Laminierpresse nach mindestens einem der Ansprüche 8 bis 11,
**dadurch gekennzeichnet,**
**dass** Spannmittel (12) für die Trennfolie (10) zur Vermeidung einer Faltenbildung vorhanden sind.

13. Laminierpresse nach mindestens einem der Ansprüche 8 bis 12,
**dadurch gekennzeichnet,**
**dass** ein durch die Pressenkammer (1) laufendes, im Wesentlichen synchron mit der Trennfolie bewegbares Förderband (7) vorgesehen ist.

14. Laminierpresse nach mindestens einem der Ansprüche 8 bis 13,
**dadurch gekennzeichnet,**
**dass** Mittel (11) zum Anheben des Werkstücks (8) relativ zur unteren Kammerhälfte (3) vorhanden sind.

## Claims

1. Method of laminating workpieces that comprise at least one heat-activatable adhesive layer, under the action of pressure and heat, comprising the following steps:
- introduction of at least one workpiece (8) into an opened, air-tightly closable press chamber (1) of a laminating press, having an upper chamber half (2) and a lower chamber half (3) which are movable relative to one another in order to open or close the press chamber (1), having a circumferential single-part or multi-part seal (5) arranged between the upper and lower chamber halves (2, 3), having a membrane (9) which is mounted directly or indirectly on the upper chamber half (2) and air-tightly divides the press chamber (1), and having means (6) for introducing heat into the workpiece (8),
- introduction of a separating film (10) into the press chamber (1) of the laminating press, which separating film covers the workpiece (8) towards the top with respect to the membrane (9),
- closure of the press chamber (1),
- evacuation of at least the volume of the press chamber (1) that is located below the membrane (9) and surrounds the workpiece (8), application of heat to the workpiece (8),
**characterised in that**
the separating film (10) is relieved of tension prior to closure of the press chamber (1).

2. Method according to claim 1,
**characterised in that**
the workpiece (8) is raised prior to the air-tight closure of the press chamber (1).

3. Method according to claim 2,
**characterised in that**
the separating film (10) is relieved of tension prior to or during the raising of the workpiece (8).

4. Method according to at least one of claims 1 to 3,
**characterised in that**
the press chamber (1) is almost closed, then the separating film (10) is relieved of tension, and then the press chamber (1) is fully air-tightly closed.

5. Method according to at least one of claims 1 to 4,
**characterised in that**
the introduction of the workpiece (8) into the press chamber (1) is effected by means of a conveyor belt (7) which runs through the press chamber (1) and is moved substantially synchronously with the separating film (10).

6. Method according to at least one of claims 1 to 5,
**characterised in that**
the separating film (10), on introduction into the press chamber (1), is held flat under tension to prevent the formation of folds.

7. Method according to at least one of claims 1 to 6,
**characterised in that**
the separating film (10) is relieved of tension by movement of separating film guide elements (13).

8. Laminating press for laminating workpieces that comprise at least one heat-activatable adhesive layer, under the action of pressure and heat, comprising at least one air-tightly closable press chamber (1) having an upper chamber half (2) and a lower chamber half (3) which are movable relative to one another in order to open or close the press chamber (1), having a circumferential single-part or multi-part seal (5) arranged between the upper and lower chamber halves (2, 3), having a membrane (9) which is mounted directly or indirectly on the upper chamber half (2) and air-tightly divides the press chamber (1), and having means (6) for introducing heat into the workpiece, at least the lower chamber half (3) being provided with means for evacuating the closed press chamber (1), and there being provided a separating film (10) which is arranged to be introduced into the opened press chamber (1) with at least one workpiece (8) and covers the workpiece (8) towards the top with respect to the membrane (9),
**characterised by**
means (13) for relieving tension on the separating film (10).

9. Laminating press according to claim 8,
**characterised in that**
the means for relieving tension on the separating film (10) are coupled to guide elements (13) for the separating film (10).

10. Laminating press according to claim 9,
**characterised in that**
the guide elements are in the form of redirecting stations (13) or in the form of traction means for the separating film (10).

11. Laminating press according to claim 10,
**characterised in that**
at least one redirecting station (13) for the separating film (10) is movable perpendicular to the redirection axis as required.

12. Laminating press according to at least one of claims 8 to 11,
**characterised in that**
tensioning means (12) for the separating film (10) are provided for preventing the formation of folds.

13. Laminating press according to at least one of claims 8 to 12,
**characterised in that**
a conveyor belt (7) is provided which runs through the press chamber (1) and is movable substantially synchronously with the separating film.

14. Laminating press according to at least one of claims 8 to 13,
**characterised in that**
means (11) are provided for raising the workpiece (8) relative to the lower chamber half (3).

## Revendications

1. Procédé de stratification contrecollée, sous l'action de la pression et de la chaleur, de pièces à traiter renfermant au moins une couche d'adhésif activable sous l'effet de la chaleur, incluant les étapes opératoires consistant à :
- introduire au moins une pièce à traiter (8) dans une chambre de pressage (1) d'une presse de contrecollage, ouverte et pouvant être fermée avec étanchéité à l'air, comprenant une moitié supérieure (2) et une moitié inférieure (3) mobiles l'une par rapport à l'autre en vue d'ouvrir ou de fermer ladite chambre de pressage (1) ; une garniture périphérique d'étanchement (5) en une ou plusieurs partie(s), interposée entre lesdites moitiés supérieure et inférieure (2, 3) de ladite chambre ; une membrane (9) qui scinde ladite chambre de pressage (1) avec étanchéité à l'air et est implantée, directement ou indirectement, sur la moitié supérieure (2) de ladite chambre ; ainsi que des moyens (6) d'induction de chaleur dans ladite pièce à traiter (8),
- introduire, dans la chambre de pressage (1) de ladite presse de contrecollage, un feuil de séparation (10) recouvrant ladite pièce à traiter (8) vers le haut, vis-à-vis de ladite membrane (9),
- fermer ladite chambre de pressage (1),
- créer un vide au moins dans le volume de ladite chambre de pressage (1) qui est situé au-dessous de ladite membrane (9), et entoure ladite pièce à traiter (8),
- soumettre ladite pièce à traiter (8) à l'action de la chaleur,
**caractérisé par le fait**
**que** le feuil de séparation (10) est soulagé préalablement à la fermeture de la chambre de pressage (1).

2. Procédé selon la revendication 1,
**caractérisé par le fait**
**que** la pièce à traiter (8) est soulevée préalablement à la fermeture de la chambre de pressage (1) avec étanchéité à l'air.

3. Procédé selon la revendication 2,
**caractérisé par le fait**
**que** le feuil de séparation (10) est soulagé avant ou pendant le soulèvement de la pièce à traiter (8).

4. Procédé selon au moins l'une des revendications 1 à 3,
**caractérisé par le fait**
**que** la chambre de pressage (1) est approximativement fermée, le feuil de séparation (10) est ensuite soulagé, puis ladite chambre de pressage (1) est intégralement fermée avec étanchéité à l'air.

5. Procédé selon au moins l'une des revendications 1 à 4,
**caractérisé par le fait**
**que** l'introduction de la pièce à traiter (8), dans la chambre de pressage (1), s'opère au moyen d'une bande convoyeuse (7) qui défile à travers ladite chambre de pressage (1) et est mue, pour l'essentiel, en synchronisme avec le feuil de séparation (10).

6. Procédé selon au moins l'une des revendications 1 à 5,
**caractérisé par le fait**
**que** la surface du feuil de séparation (10) est maintenue tendue, lors de l'introduction dans la chambre de pressage (1), en vue d'éviter une formation de plis.

7. Procédé selon au moins l'une des revendications 1 à 6,
**caractérisé par le fait**
**que** le soulagement du feuil de séparation (10) a lieu par mouvement imprimé à des éléments (13) de guidage dudit feuil de séparation.

8. Presse de contrecollage dévolue à la stratification contrecollée, sous l'action de la pression et de la chaleur, de pièces à traiter renfermant au moins une couche d'adhésif activable sous l'effet de la chaleur, équipée d'au moins une chambre de pressage (1) pouvant être fermée avec étanchéité à l'air, comprenant une moitié supérieure (2) et une moitié inférieure (3) mobiles l'une par rapport à l'autre en vue d'ouvrir ou de fermer ladite chambre de pressage (1) ; une garniture périphérique d'étanchement (5) en une ou plusieurs partie(s), interposée entre lesdites moitiés supérieure et inférieure (2, 3) de ladite chambre ; une membrane (9) qui scinde ladite chambre de pressage (1) avec étanchéité à l'air et est implantée, directement ou indirectement, sur la moitié supérieure (2) de ladite chambre ; ainsi que des moyens (6) d'induction de chaleur dans ladite pièce à traiter (8), sachant qu'au moins la moitié inférieure (3) de la chambre est pourvue de moyens conçus pour créer un vide dans ladite chambre de pressage (1) fermée, et sachant qu'il est prévu un feuil de séparation (10) qui peut être introduit dans la chambre de pressage (1) ouverte, avec au moins uns pièce à traiter (8), et qui recouvre ladite pièce à traiter (8) vers le haut, vis-à-vis de ladite membrane (9),
**caractérisée par**
des moyens (13) affectés au soulagement du feuil de séparation (10).

9. Presse de contrecollage selon la revendication 8,
**caractérisée par le fait**
**que** les moyens, affectés au soulagement du feuil de séparation (10), sont couplés à des éléments de guidage (13) dédiés audit feuil de séparation (10).

10. Presse de contrecollage selon la revendication 9,
**caractérisée par le fait**
**que** les éléments de guidage sont réalisés sous la forme de postes de renvoi (13), ou de moyens de traction dédiés au feuil de séparation (10).

11. Presse de contrecollage selon la revendication 10,
**caractérisée par le fait**
**qu'**au moins un poste de renvoi (13) dédié au feuil de séparation (10) peut, si besoin est, être animé de mouvements perpendiculaires à l'axe de renvoi.

12. Presse de contrecollage selon au moins l'une des revendications 8 à 11,
**caractérisée par**
la présence de moyens de tension (12) dédiés au feuil de séparation (10), en vue d'éviter une formation de plis.

13. Presse de contrecollage selon au moins l'une des revendications 8 à 12,
**caractérisée par le fait**
**qu'**il est prévu une bande convoyeuse (7) qui défile à travers la chambre de pressage (1) et peut être mue, pour l'essentiel, en synchronisme avec le feuil de séparation.

14. Presse de contrecollage selon au moins l'une des revendications 8 à 13,
**caractérisée par**
la présence de moyens (11) conçus pour soulever la pièce à traiter (8) par rapport à la moitié inférieure (3) de la chambre.
